# EUROPEAN PATENT SPECIFICATION

(11) **EP 1 772 656 B1**
(45) Date of publication and mention of the grant of the patent: **17.12.2008**
(21) Application number: 06076828.0
(22) Date of filing: 03.10.2006
(51) Int. Cl.: F16K 11/04

(54) **Mixer valve**
Mischventil
Mitigeur

(30) Priority: 07.10.2005 IT MI20051888
(43) Date of publication of application: 11.04.2007
(73) Proprietor: WATTS INDUSTRIES ITALIA S.r.l., Bolzano (IT)
(72) Inventor: Ferretti, Umberto, Bolzano (IT)
(74) Representative: Raimondi, Margherita

(56) References cited:
- EP-A1- 0 092 333
- DE-A1- 3 442 490
- FR-A1- 2 861 453

## Description

The present invention relates to a mixer valve for low-temperature circuits. A valve as that of the preamble of claim 1 has been disclosed in document EP 0 092 333.

It is known, in the technical sector relating to heating systems of the type comprising radiating panels arranged underneath the floor, that, in order to ensure correct operation of the system, the said panels must be supplied with water having a temperature much lower than that of the boiler.

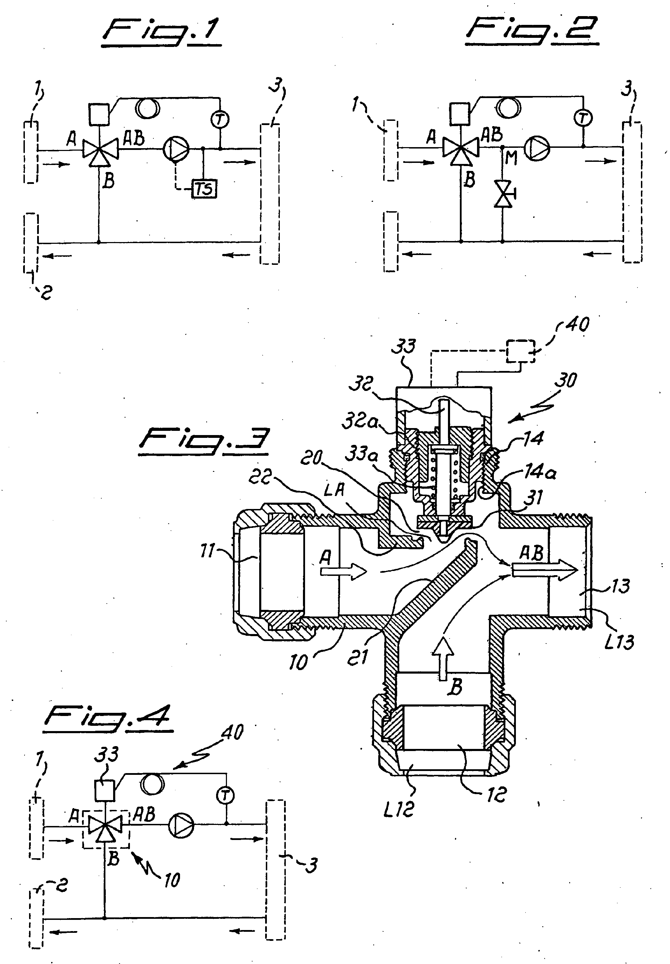

For this purpose, it is required to provide circuits for mixing the hot water of the boiler (delivery) with the cold water of the panels (return), which are essentially based on the use of a three-way mixer valve (Fig. 1) or a three-way valve associated with a calibrated by-pass valve arranged in parallel (Fig. 2); both the mixer valves are controlled to open/close by means of an actuator connected to a remote temperature sensor.

Although performing their function, these arrangements and associated valves have certain drawbacks arising from the particular application which requires a maximum temperature of the fluid, which is mixed and supplied to the user devices, a few tens of degrees less than that of the fluid entering the valve, and the need to ensure high flowrates of the fluid circulating inside the radiating panels in order to obtain the necessary quantity of heat from the low-temperature fluid; in these conditions it occurs that:
- in the first case (Fig. 1) of the three-way mixer valve it is required to design the said valve with very large flow apertures in order to obtain the desired flowrates in the radiating panel circuit, but the hot water delivery aperture must also be reduced to a third or less owing to the need to limit the delivery flow of the high-temperature water, with consequent substantial malfunctioning of the control valve; in addition to this, basically there is no effective measure which can be taken to prevent the risk of malfunctioning of the safety thermostat and the control actuator and/or incorrect regulation which would result in water with temperatures (75-80°C) much higher than the maximum permissible temperatures (50°) reaching the radiating panels;
- in the second case (Fig. 2) of the three-way valve associated with a second by-pass valve (so-called bleed-off circuit), the three-way valve has small dimensions, while the by-pass valve has large dimensions; this solution tends to solve partially the problems posed by the circuit according to Fig. 1, but makes the structural layout of the system more complex and implementation thereof more difficult; since a second valve must be inserted, in addition to this, in order to obtain limited losses of head (outflow coefficient Kᵥ comparable to that of the three-way valve), it is required to design the by-pass valve with larger dimensions, with a further increase not only in the costs but also in the volume which is often critical in the usual applications.

The technical problem which is posed, therefore, is that of providing a mixer valve which is particularly suitable for use in systems where the temperature of the fluid supplied to the user devices is much lower than that of the delivery fluid, has low losses of head and is able to ensure safe conditions, limiting the temperature at which the mixed fluid is supplied in the event of malfunctioning of the thermostat and/or the actuator.

In connection with this problem it is also required that the valve should have limited dimensions and be easy and inexpensive to produce, install and maintain.

These results are achieved according to the present invention by a valve for mixing at least two fluids, one of which has a temperature higher than the other one, comprising a valve body with, formed therein, a first aperture for entry of the higher temperature fluid, a second aperture for entry of the lower temperature fluid and a third aperture, which is substantially coaxial with the first aperture, for supplying the mixed fluid, the valve body being provided internally with a seat, for through-flow of the higher temperature water, which can be intercepted by closing means, said seat being delimited by at least one baffle arranged in a position substantially inclined with respect to the direction of flow of the higher temperature fluid and towards the aperture for supplying the mixed fluid, so as to keep the higher temperature fluid separate from the lower temperature fluid.

Further details may be obtained from the following description of a non-limiting example of embodiment of the subject of the present invention provided with reference to the accompanying drawings in which:
- Figure 1 shows a connection block diagram of a supply system of the known type with a three-way mixer valve;
- Figure 2 shows a connection block diagram of a supply system of the known type with a mixer valve and by-pass valve;
- Figure 3 shows a schematic cross-sectional view, along a vertical plane, of a three-way valve according to the present invention; and
- Figure 4 shows a connection block diagram of a supply circuit with a mixer valve according to the present invention.

Figs. 1 and 2 relating to the state of the known art have already been commented on in the introductory paragraph.

As shown in Fig. 3, the hydraulic circuit comprising the valve according to the present invention is arranged between the delivery pipe 1 and return pipe 2 for the hot water of the boiler and the downstream user devices 3 consisting of radiating panels (thermal load of the circuit).

The valve according to the present invention essentially consists of a body 10 on which the following are formed: a first inlet mouth 11 for the hot fluid "A", a second inlet mouth 12 for entry of the cold fluid "B" returning from the user devices 3 and a third mouth 13, substantially coaxial with the first mouth 11, for supplying the mixed fluid "AB".

The interior of the body 10 of the valve is also provided with a seat 20 formed by: a first baffle 21 arranged in a position substantially inclined with respect to the direction of the delivery flow and so as to keep the latter separate from the cold return fluid B and a flange 22 substantially parallel to the direction of flow of the hot fluid A.

The aperture LA of said seat 20 can be intercepted by means of a suitable obturator 31 which is integral with actuator means 30 for opening/closing the valve.

Said actuator means 30 essentially consist of a pin 32 which is coaxially inserted in a threaded part 32a able to engage with a female thread 14a of an additional opening 14 of the valve body 10 arranged in a direction substantially perpendicular to the direction of flow of the hot fluid A.

As schematically shown in Fig. 4, the movement of the pin 32 is controlled by a servomechanism 33 in turn connected to temperature detection means 40 which cause the movement thereof in one direction (opening) or the other (closing), against the thrusting action of a spring 33a coaxial with the said pin 32, which spring, in the event of malfunctioning of the control means 40, cause complete opening of the valve.

According to preferred embodiments and in order to obtain the intrinsic safety function of the valve, namely prevent the temperature of the delivery water from being able to exceed 50°C, also in the case of breakage of the control means 40 with consequent total opening of the valve 30, it is moreover envisaged that the aperture LA of the seat 20 for delivery of hot water A to the mixing duct 13 is fixed at a predetermined value less than 33% of the aperture L13 of the latter and that the aperture L12 of the return duct 12 for the cold water B is greater than 67% of the said aperture of the mixing duct 13.

In this way, the cross-sections of the valve body ducts as described above, assuming the flowrate of the mixed water AB to be 100%, produce a ratio (A/AB) of the flowrates between hot water A and mixed water AB less than/equal to 33% and a ratio (B/AB) between cold return water B and mixed water greater than/equal to 67%, achieving the mentioned desired intrinsic safety of the valve.

Essentially the valve according to the invention forms a three-way valve with internal or bleed-off means, which is able to:
+) ensure a high head coefficient even with small dimensions of the delivery apertures since the flow duct B-AB for the return fluid is free of regulating/closing members which are the main causes of losses of head in normal mixer valves;
+) ensure safety conditions in respect of overtemperatures of the mixed and supplied fluid AB, due to breakages of the sensor, since the bleed-off of the high temperature fluid is in any case limited and such as to keep the temperature of the fluid mixed and supplied by the valve well below the permissible limit values;
+) provide the possibility of calibrating the outflow coefficient of the bleed-off K_{A-AB} already during design of the valve; preferably said outflow coefficient is envisaged for values Kv_{A-AB} ≤ 0.33 Kv_{B-AB}, where Kv_{B-AB} is the outflow coefficient of the cold fluid B, thereby resulting in a universal valve which does not require further adjustment during installation.

Overall the valve according to the invention therefore allows recirculation of more water in the system without an increase in the overall flowrate, but only making use of the limitation in the loss of head, this making it possible to supply greater lengths of wide-pitch pipe or a greater extension of narrow-pitch pipe, making it possible to optimise heating in those areas where a high temperature gradient exists between one zone and the next; alternatively it is also possible to reduce the capacity of the boiler pump which does not have to make up for the head losses of the system with obvious advantages in terns of reliability and reduction in costs.

## Claims

1. Valve for mixing at least two fluids, one of which (A) has a temperature higher than the other one (B), comprising a valve body (10) with, formed therein, a first aperture (11) for entry of the hot fluid (A), a second aperture (12) for entry of the cold fluid (B) and a third aperture (13), which is substantially coaxial with the first aperture (11), for supplying the mixed fluid (AB), **characterized in that** the value body (10) is provided internally with a seat (20), for through-flow of the higher temperature fluid (A), which can be intercepted by closing means (31), said seat (20) being delimited by at least one baffle (21) arranged in a position substantially inclined with respect to the direction of flow of the higher temperature fluid (A) and towards the aperture (13) for supplying the mixed fluid (AB), so as to keep the higher temperature fluid (A) separate from the lower temperature fluid (B).

2. Valve according to Claim 1, **characterized in that** said seat (20) for through-flow of the hot water (A) is delimited by a flange (22) substantially parallel to the direction of flow of the higher temperature fluid (A).

3. Valve according to Claim 1, **characterized in that** the temperature of the mixed fluid (AB) is much lower than that of the higher temperature fluid (A) entering the valve.

4. Valve according to Claim 3, **characterized in that** said means for intercepting the seat (20) essentially consist of an obturator (31) integral with a pin (32) movable in a direction substantially perpendicular to the direction of flow of the higher temperature fluid.

5. Valve according to Claim 4, **characterized in that** said pin (32) is coaxially inserted inside a threaded part (32a) able to engage with a female thread (14a) of an additional opening (14) of the valve body (10) arranged in a direction substantially perpendicular to the direction of flow of the higher temperature fluid (A).

6. Valve according to Claim 4, **characterized in that** said pin (32) is connected to a servomechanism (33) in turn connected to temperature detection means (40) which produce the movement thereof in one direction or the other against the thrusting action of a spring (33a) coaxial with the said pin (32).

7. Valve according to Claim 1, **characterized in that** it has an aperture (LA) of the seat (20) for delivery of the higher temperature fluid (A) which is smaller than/equal to 33% of the aperture (L13) of the mixing duct (13) and aperture (L12) of the return duct (12) for the lower temperature fluid (B) greater than/equal to 67% of the said aperture of the mixing duct (13).

8. Valve according to Claim 1, **characterized in that** the ratio (A/AB) between the flowrates of the higher temperature fluid and the mixed fluid is smaller than/equal to 33% and the ratio (B/AB) between the flowrate of the lower temperature return fluid (B) and the flowrate of the mixed fluid (AB) is greater than/equal to 67%, assuming the flowrate (AB) of the mixed fluid to be equal to 100%.

9. Valve according to Claim 1, **characterized in that** it has an outflow coefficient (K_{A-AB}), through the seat (20), of the higher temperature fluid (A) with a fixed predetermined value.

10. Valve according to Claim 7, **characterized in that** the value of said outflow coefficient (K_{A-AB}) for the higher temperature fluid has values Kv_{A-AB} ≤ 0.33 Kv_{B-AB}, where (Kv_{B-AB}) is the outflow coefficient of the lower temperature fluid (B).

## Patentansprüche

1. Ventil zur Mischung von mindestens zwei Fluiden, wovon eines (A) eine höhere Temperatur als das andere (B) hat, umfassend einen Ventilkörper (10) mit, darin geformt, einer ersten Öffnung (11) für den Eintritt des heissen Fluids (A), einer zweiten Öffnung (12) für den Eintritt des kalten Fluids (B) und einer dritten Öffnung (13), welche im wesentlichen koaxial zur ersten Öffnung (11) ist, zur Ausgabe des gemischten Fluids (AB), **dadurch gekennzeichnet, dass** der Ventilkörper (10) innen mit einem Sitz (20) zum Durchfluss des Fluids (A) mit höherer Temperatur ausgestattet ist, welcher durch Verschlussmittel (31) unterbrochen werden kann, wobei der genannte Sitz (20) durch mindestens eine Platte (21) begrenzt ist, welche in einer bezüglich der Fliessrichtung des Fluids (A) mit höherer Temperatur und gegen die Öffnung (13) zur Ausgabe des gemischten Fluids (AB) im wesentlichen geneigten Position angeordnet ist, derart, dass das Fluid (A) mit höherer Temperatur von dem Fluid (B) mit tieferer Temperatur getrennt gehalten werden kann.

2. Ventil nach Anspruch 1, **dadurch gekennzeichnet, dass** der genannte Sitz (20) für den Durchfluss des heissen Wassers (A) durch einen Flansch (22) im wesentlichen parallel zur Fliessrichtung des Fluids (A) mit höherer Temperatur begrenzt ist.

3. Ventil nach Anspruch 1, **dadurch gekennzeichnet, dass** die Temperatur des gemischten Fluids (AB) viel tiefer ist als diejenige des in das Ventil eintretenden Fluids (A) mit höherer Temperatur.

4. Ventil nach Anspruch 3, **dadurch gekennzeichnet, dass** die genannten Mittel zum Verschluss des Sitzes (20) im wesentlichen aus einem Absperrorgan (31) einschliesslich eines in einer im wesentlichen senkrecht zur Fliessrichtung des Fluids mit höherer Temperatur bewegbaren Stiftes (32) bestehen.

5. Ventil nach Anspruch 4, **dadurch gekennzeichnet, dass** der genannte Stift (32) koaxial in einen mit einem Gewinde versehenen Teil (32a) eingeführt ist, welcher dazu geeignet ist in ein Innengewinde (14) einer zusätzlichen Öffnung (14) des Ventilkörpers (10) einzugreifen, welche in einer im wesentlichen senkrechten Richtung zur Fliessrichtung des Fluids (A) mit höherer Temperatur angeordnet ist.

6. Ventil nach Anspruch 4, **dadurch gekennzeichnet, dass** der genannte Stift (32) mit einem Servomechanismus (33) verbunden ist, welcher seinerseits mit einem Mittel (40) zur Erfassung der Temperatur verbunden ist, welche dessen Bewegung in der einen oder anderen Richtung gegen die Schubwirkung einer zum genannten Stift (32) koaxialen Feder (33a) bewirken.

7. Ventil nach Anspruch 1, **dadurch gekennzeichnet, dass** es eine Öffnung (LA) des Sitzes (20) zur Lieferung des Fluids (A) mit höherer Temperatur hat, welche kleiner als/gleich 33% als die Öffnung (L13) des Mischkanals (13) ist und die Öffnung (L12) des Rückflusskanals (12) für das Fluids (B) mit der tieferen Temperatur grösser als/gleich 67% der genannten Öffnung des Mischkanals (13) ist.

8. Ventil nach Anspruch 1, **dadurch gekennzeichnet, dass** das Verhältnis (A/AB) zwischen den Fliessraten des Fluids mit höherer Temperatur und des gemischten Fluids kleiner als/gleich 30% ist und das Verhältnis (B/AB) zwischen der Fliessrate des Rückflussfluids (B) mit tieferer Temperatur und der Fliessrate des gemischten Fluids (AB) grösser als/gleich 67% ist, vorausgesetzt dass die Fliessrate (AB) des gemischten Fluids gleich 100% ist.

9. Ventil nach Anspruch 1, **dadurch gekennzeichnet, dass** es einen Ausflusskoeffizienten (K_{A-AB}) des Fluids (A) mit höherer Temperatur durch den Sitz (20) mit einem festen vorbestimmten Wert hat.

10. Ventil nach Anspruch 7, **dadurch gekennzeichnet, dass** der Wert des genannten Ausflusskoeffizienten (K_{A-AB}) für das Fluid mit höherer Temperatur Werte K_{VA-AB} ≤ 0.33 Kv_{B-AB} hat, wobei (Kv_{B-AB}) der Ausflusskoeffizient des Fluids (B) mit tieferer Temperatur ist.

## Revendications

1. Vanne pour mélanger au moins deux fluides, dont l'un (A) a une température plus élevée que l'autre (B), comportant un corps de vanne (10), avec formée en lui, une première ouverture (11) pour l'entrée du fluide chaud (A), une deuxième ouverture (12) pour l'entrée du fluide froid (B) et une troisième ouverture (13), laquelle est essentiellement coaxiale avec la première ouverture (11), pour fournir le fluide mélangé (AB), **caractérisée en ce que** le corps de vanne (10) est prévu avec, à l'intérieur, un siège (20), pour une circulation à travers lui du fluide à température plus élevée (A), lequel peut être intercepté par des moyens de fermeture (31), ledit siège (20) étant délimité par au moins un déflecteur (21) disposé suivant une position essentiellement inclinée par rapport à la direction d'écoulement du fluide à température plus élevée (A) et dirigée vers l'ouverture (13) servant à fournir le fluide mélangé (AB) de façon à maintenir le fluide à température plus élevée (A) séparé du fluide à température plus basse (B).

2. Vanne selon la revendication 1, **caractérisée en ce que** ledit siège (20) permettant la circulation à travers lui de l'eau chaude (A) est délimité par un rebord (22) essentiellement parallèle à la direction d'écoulement du fluide à température plus élevée (A).

3. Vanne selon la revendication 1, **caractérisée en ce que** la température du fluide mélangé (AB) est beaucoup plus basse que celle du fluide à température plus élevée(A) entrant dans la vanne.

4. Vanne selon la revendication 3, **caractérisée en ce que** lesdits moyens pour intercepter le siège (20) sont constitués essentiellement d'un obturateur (31) solidaire d'une broche (32) mobile dans une direction essentiellement perpendiculaire à la direction d'écoulement du fluide à température plus élevée.

5. Vanne selon la revendication 4, **caractérisée en ce que** ladite broche (32) est insérée de façon coaxiale à l'intérieur d'une pièce filetée (32a) capable de coopérer avec un filetage intérieur (14a) d'une ouverture supplémentaire (14) du corps de vanne (10) disposée suivant une direction essentiellement perpendiculaire à la direction d'écoulement du fluide à température plus élevée (A).

6. Vanne selon la revendication 4, **caractérisée en ce que** ladite broche (32) est connectée à un servomécanisme (33) qui est, à son tour, connecté à des moyens de détection de température (40), lesquels produisent son déplacement dans une direction ou dans l'autre contre l'action de poussée d'un ressort (33a) coaxial avec ladite broche (32).

7. Vanne selon la revendication 1, **caractérisée en ce qu'**elle comporte une ouverture (LA) du siège (20) permettant la distribution du fluide à température plus élevée (A), laquelle est inférieure ou égale à 33% de l'ouverture (L13) du conduit de mélange (13) et l'ouverture (L12) du conduit de retour (12) pour le fluide à température moins élevée (B) est plus grande que ou égale à 67 % de ladite ouverture du conduit de mélange (13).

8. Vanne selon la revendication 1, **caractérisée en ce que** le rapport (A/AB) entre les débits du fluide à température plus élevée et du fluide mélangé est plus petit que ou égal à 33 % et **en ce que** le rapport (B/AB) entre le débit du fluide du renvoi à température inférieure (B) et le débit du fluide mélangé (AB) est plus grand que, ou égal à, 67 %, en supposant que le débit (AB) du fluide mélangé soit égal à 100%.

9. Vanne selon la revendication 1, **caractérisée en ce qu'**elle possède un coefficient d'écoulement (K_{A-AB}), à travers le siège (20), du fluide à température plus élevée (A) ayant une valeur fixe prédéterminée.

10. Vanne selon la revendication 7, **caractérisée en ce que** la valeur dudit coefficient d'écoulement (K_{A-AB}) pour le fluide à température plus élevée présente des valeurs de KV_{A-AB} ≤ 0,33 KV_{B-AB}, où (KV_{B-AB}) est le coefficient d'écoulement du fluide à température moins élevée (B).
